# DEMANDE DE BREVET EUROPEEN

(11) **EP 0 838 143 A1**
(43) Date de publication de la demande: **29.04.1998**
(21) Numéro de dépôt: 97402481.2
(22) Date de dépôt: 20.10.1997
(51) Int. Cl.: A01D 23/06, A01D 33/06, A01D 27/00

(54) **Appareil pour effeuiller et décolleter des betteraves**

(30) Priorité: 24.10.1996 FR 9612965
(71) Demandeur: ETABLISSEMENTS FRANQUET, F-02190 Guignicourt (FR)
(72) Inventeur: Boucton, Jean, 51110 Bazacourt (FR); Franquet, Benoist, 51100 Reims (FR)
(74) Mandataire: Hammond, William

(57) **Abrégé**

Appareil (1) pour effeuiller et décolleter des betteraves ou plantes analogues qui est porté à l'avant d'une machine arracheuse-ramasseuse (2) et qui est du genre comprenant un châssis (3) comportant, d'une part, un rotor (4) pourvu de fléaux rotatifs tournant autour d'un axe horizontal perpendiculaire par rapport à la direction d'avancement et un capot déflecteur (5) orientant la trajectoire des morceaux de feuilles découpés par les fléaux pour les faire retomber sur le sol en arrière du rotor (4) par rapport au sens d'avancement, et, d'autre part, des moyens d'accrochage (7) sur la machine arracheuse-ramasseuse (2) et des moyens de portance.

Les moyens d'accrochage (7) comprennent au moins un parallélogramme déformable (8) dont un côté (9) est solidaire de la partie avant de la machine arracheuse-ramasseuse (2) et situé dans un plan vertical perpendiculaire à l'axe du rotor (4).

Application au machinisme agricole.

## Description

La présente invention est relative à un appareil pour effeuiller et décolleter des betteraves avant le passage des moyens d'arrachage et de ramassage.

Le document FR-A-2.450.042 concerne un dispositif d'effeuillage de betteraves comprenant un arbre rotatif horizontal muni de couteaux et disposé perpendiculairement au sens d'avancement du dispositif et une gaine courbe enveloppant cet arbre et ses couteaux, en avant, au dessus et en arrière et ramenant les débris de feuilles hachées vers l'arrière, en un flot réparti sur toute la longueur de la gaine. Cette gaine est munie, intérieurement, de déflecteurs divisant le flot en jets séparés et amenant ceux-ci sur le sol entre les raies de betteraves qui viennent d'être effeuillées.

Le document FR-A-2.622.764 est relatif à un dispositif pour effeuiller des végétaux cultivés en lignes et pourvus d'une touffe de feuilles s'étendant au dessus d'un tronc ou tubercule en saillie sur le sol, tels que des betteraves ou des carottes ; ce dispositif comporte au moins un rotor pourvu de fléaux rotatifs tournant autour d'un axe horizontal perpendiculaire à la direction d'avancement, et un capot déflecteur orientant la trajectoire des morceaux de feuilles découpés par les fléaux pour les faire retomber sur le sol en arrière du ou des rotors par rapport au sens d'avancement. Les fléaux sont formés d'une pièce de tôle pliée comportant une partie active et une partie de liaison reliant cette partie active à des pivots montés sur le rotor et d'axe parallèle à celui du rotor, les parties actives de deux fléaux adjacents étant pratiquement jointives au cours de la marche dans le sens parallèle à l'axe du rotor.

Ce dispositif a notamment pour but de projeter les morceaux de feuilles coupées sur le sol sans recouvrir les betteraves restées en terre.

Le document FR-A-2.614.895 concerne aussi un dispositif pour effeuiller des végétaux cultivés en lignes et pourvus d'une touffe de feuilles s'étendant au-dessus d'un tronc ou tubercule en saillie sur le sol, tels que des betteraves ou des carottes. Ce dispositif est prévu pour être déplacé parallèlement aux lignes de végétaux et comporte :
- un premier rotor pourvu de fléaux aptes à couper les feuilles, ce rotor tournant autour d'un axe de rotation horizontal, perpendiculaire à la direction d'avancement, et situé au-dessus du sol, le sens de rotation du rotor étant défini par le fait que la partie inférieure du rotor se déplace dans la direction d'avancement,
- un second rotor, pourvu de fléaux souples, aptes à compléter l'effeuillage sans endommager la tête ou le tronc des végétaux, ce rotor tournant autour d'un axe parallèle à celui du premier rotor et dans le même sens de rotation, et étant situé en arrière de lui dans le sens du déplacement du dispositif, et
- un capot passant au-dessus des deux rotors et descendant vers l'arrière, dans le sens du déplacement, jusqu'au voisinage du sol, ce capot présentant intérieurement des nervures déflectrices situées en correspondance avec les lignes de ces végétaux, le capot définissant, pour les morceaux de feuilles découpés par les fléaux du premier et du second rotors, un trajet qui aboutit à la partie de la surface du sol qui se trouve entre les lignes de végétaux, et à l'arrière du dispositif.

Le second rotor est dépourvu de fléaux dans les parties de sa longueur qui sont au droit des intervalles entre les nervures du capot, et pourvu de fléaux dans les parties de sa longueur qui sont au droit des nervures.

Ces dispositifs de l'art antérieur ne permettent que de réaliser imparfaitement des andains de feuilles arrachées entre les rangées de betteraves ou de plantes analogues. Par ailleurs, le problème de la portance et du guidage de tels appareils n'est pas résolu par ces appareils connus.

Aussi un des buts de la présente invention est-il de fournir un appareil pour effeuiller et décolleter des betteraves et plantes analogues porté à l'avant d'une machine arracheuse-ramasseuse, qui permet d'obvier aux inconvénients de l'art antérieur.

Ce but, ainsi que d'autres qui apparaîtront par la suite, sont atteints par un appareil pour effeuiller et décolleter des betteraves et plantes analogues porté à l'avant d'une machine arracheuse-ramasseuse du genre comprenant un châssis comportant, d'une part, un rotor pourvu de fléaux rotatifs tournant autour d'un axe horizontal perpendiculaire par rapport à la direction d'avancement et un capot déflecteur orientant la trajectoire des morceaux de feuilles découpés par les fléaux pour les faire retomber en andains sur le sol en arrière du rotor par rapport au sens d'avancement, et, d'autre part, des moyens d'accrochage sur la machine arracheuse-ramasseuse et des moyens de portance, lequel appareil est, selon la présente invention, caractérisé par le fait que les moyens d'accrochage comprennent, d'une part, au moins un parallélogramme déformable dont un côté est solidaire de la partie avant de la machine arracheuse-ramasseuse et situé dans un plan vertical perpendiculaire à l'axe du rotor.

Avantageusement, chaque parallélogramme comporte un vérin à pression ajustable et constante. Ce vérin est disposé entre le sommet haut du parallélogramme situé sur le côté vertical solidaire de la partie avant, et le côté inférieur sensiblement horizontal. Le sommet haut ci-dessus est en fait constitué par une biellette reliant le côté vertical au côté supérieur du parallélogramme.

De préférence, le côté vertical ci-dessus est constitué par un vérin permettant de régler la hauteur du châssis par rapport au sol.

Avantageusement, les moyens de portance sont constitués par deux ensembles de roues, un ensemble avant disposé en avant du châssis, et un arrière disposé à l'arrière du châssis.

De préférence, l'ensemble avant comprend deux roues disposées sensiblement aux extrémités du châssis et comportant des moyens de réglage en hauteur.

Quant à l'ensemble arrière, il est composé de roues montées sur une barre horizontale reliant les extrémités inférieures des parallélogrammes déformables de telle sorte que ces roues soient porteuses pour l'appareil effeuilleur-décolleteur mais aussi pour la machine arracheuse-ramasseuse et de jauge pour cette dernière.

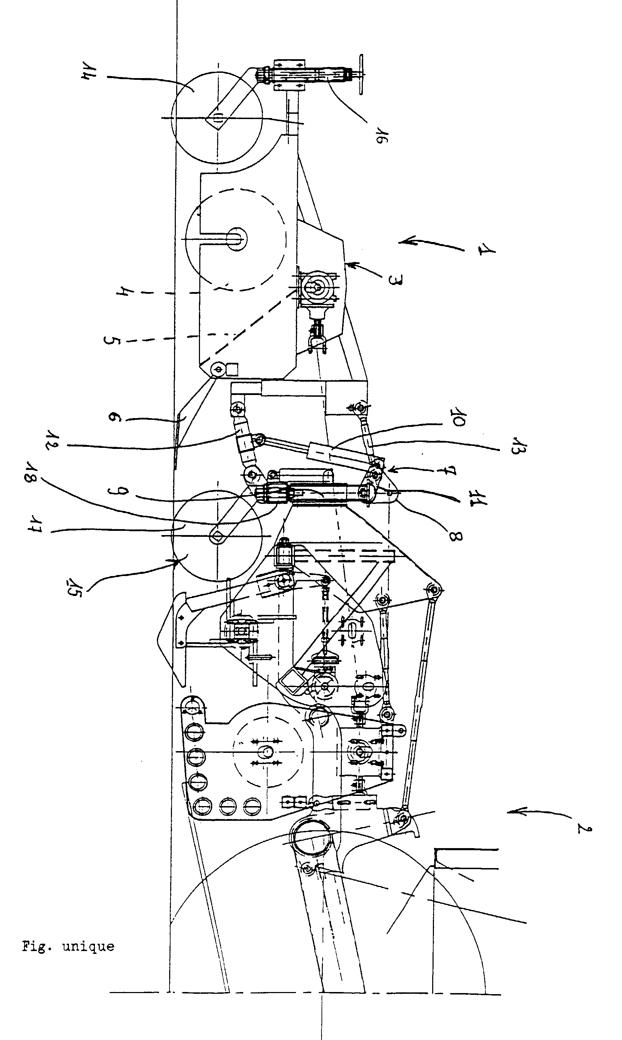

La description qui va suivre et qui ne présente aucun caractère limitatif doit être lue en regard de la figure unique annexée qui est une vue de côté schématique d'un appareil selon la présente invention.

Ainsi qu'on peut le voir sur cette figure, un appareil pour effeuiller et décolleter des betteraves et plantes analogues, désigné dans son ensemble par la référence 1, est monté à l'avant d'une arracheuse-ramasseuse désignée dans son ensemble par la référence 2.

Cet appareil 1 du genre comprenant un châssis 3 qui comporte, un rotor 4 pourvu de fléaux rotatifs (non représentés) tournant autour d'un axe horizontal perpendiculaire par rapport à la direction d'avancement et un corps déflecteur 5 orientant la trajectoire des morceaux de feuilles découpés par les fléaux pour les faire retomber sur le sol en arrière du rotor 4 par rapport au sens d'avancement.

Il se forme ainsi des andains de morceaux de feuilles 4 parallèles entre eux, de part et d'autre de chaque rang de betteraves, ces andains sont relativement larges : ils forment un ruban présentant des bords nets.

Ce châssis 3 comporte également des moyens de décolletage 6 en sa partie arrière et ce de façon connue.

Ce châssis 3 comporte enfin des moyens d'accrochage 7 constitué, dans le présent exemple de réalisation, par deux parallélogrammes déformables 8 parallèles entre eux, dont un côté 9 est solidaire de la partie avant de la machine arracheuse-ramasseuse 2 est situé dans un plan vertical perpendiculaire à l'axe du rotor 4.

Chaque parallélogramme déformable 8 comporte un vérin à pression ajustable et constante 10 qui est disposé entre son sommet supérieur 11 situé sur le côté vertical 9 solidaire de la partie avant et son côté inférieur 12 sensiblement horizontal.

Ce sommet supérieur 11 est constitué, selon le présent exemple, par une biellette reliant le côté vertical 9 et le côté supérieur 13 du parallélogramme.

Quant au côté vertical 9, il est lui-même constitué par un vérin permettant de régler la hauteur du châssis 3 par rapport au sol.

Grâce à ces parallélogrammes déformables 8, le châssis 3 peut être relevé ou abaissé par les moyens releveurs de la partie arracheuse de la machine arracheuse-ramasseuse 2.

L'appareil 1, comme dit plus haut, comporte des moyens de portance qui sont au contact du sol en position de travail ou de repos.

Ces moyens de portance sont constitués par deux ensembles de roues : un ensemble avant 14 et un ensemble arrière 15.

L'ensemble avant 14 est constitué de deux roues qui sont disposées en avant du châssis 3 par rapport au sens d'avancement et qui comportent chacune des moyens de réglage en hauteur 16 : ces roues sont de ce fait aussi appelées « roues jauge ».

L'ensemble arrière 15 est composé de roues 17 montées sur une barre horizontale 18 reliant les extrémités inférieures des côtés verticaux 9. Cette barre horizontale 18 est donc parallèle à l'axe du rotor 4.

Le nombre de roues peut être égal au nombre d'andains générés par la partie effeuilleuse : chaque roue 17 est placée sur cette barre horizontale 18 de telle sorte qu'elle roule sur un andain. Par ce fait, elle écrase les morceaux de feuilles constituant l'andain et se trouve donc mouillée par l'eau provenant de cet écrasement : ceci permet à la terre de ne pas adhérer à la roue.

Les roues 17 de l'ensemble arrière 16 sont donc toujours propres ce qui améliore valablement l'avancement de la machine arracheuse-ramasseuse 2 muni d'un tel appareil 1.

## Revendications

1. Appareil (1) pour effeuiller et décolleter des betteraves ou plantes analogues qui est porté à l'avant d'une machine arracheuse-ramasseuse (2) et qui est du genre comprenant un châssis (3) comportant, d'une part, un rotor (4) pourvu de fléaux rotatifs tournant autour d'un axe horizontal perpendiculaire par rapport à la direction d'avancement et un capot déflecteur (5) orientant la trajectoire des morceaux de feuilles découpés par les fléaux pour les faire retomber sur le sol en arrière du rotor (4) par rapport au sens d'avancement, et, d'autre part, des moyens d'accrochage (7) sur ladite machine arracheuse-ramasseuse (2) et des moyens de portance, caractérisé par le fait que lesdits moyens d'accrochage (7) comprennent au moins un parallélogramme déformable (8) dont un côté (9) est solidaire de la partie avant de ladite machine arracheuse-ramasseuse (2) et situé dans un plan vertical perpendiculaire à l'axe dudit rotor (4).

2. Appareil selon la revendication 1, caractérisé par le fait que le parallélogramme comporte un vérin à pression ajustable et constante (10), disposée entre son sommet supérieur (11) situé sur le côté vertical (9) solidaire de la partie avant et son côté inférieur (12) sensiblement horizontal.

3. Appareil son la revendication 2, caractérisé par le fait que le sommet supérieur (11) est constitué par une biellette reliant le côté vertical (9) au côté supérieur (13) du parallélogramme.

4. Appareil selon la revendication 2, caractérisé par le fait que le côté vertical (9) est constitué par un vérin (10) permettant de régler la hauteur du châssis (3) par rapport au sol.

5. Appareil selon les revendications 1 à 4, caractérisé par le fait que les moyens de portance sont constitués par deux ensembles de roues, un ensemble avant (14) situé à l'avant du châssis (3) et un ensemble arrière (15) disposé à l'arrière dudit châssis (3).

6. Appareil selon la revendication 5, caractérisé par le fait que l'ensemble avant (14) est situé aux extrémités avant du châssis (3) et comporte des moyens de réglage en hauteur.

7. Appareil selon la revendication 5, caractérisé par le fait que l'ensemble arrière (15) est composé de roues montées sur une barre horizontale (18) solidaire du sommet inférieur des parallélogrammes (8).
